# EUROPEAN PATENT APPLICATION

(11) **EP 0 943 859 A1**
(43) Date of publication of application: **22.09.1999**
(21) Application number: 99200710.4
(22) Date of filing: 09.03.1999
(51) Int. Cl.: F16M 7/00

(54) **Adjustable support foot**

(30) Priority: 19.03.1998 IT RE980015 U
(71) Applicant: BETT SISTEMI s.r.l., 41012 Carpi (Modena) (IT)
(72) Inventor: Ferrari, Fabrizio, 41012 Carpi (Modena) (IT)
(74) Representative: Corradini, Corrado

(57) **Abstract**

Adjustable support foot (1) for power machines comprising a threaded shank (9) connected to a large flat support base which comprises a rigid outer shell (2) resting on a layer of elastomeric material (12) and having a hub (7) provided with means for snap-connecting the lower profiled end of the shank, between said hub (7) and said shank (9) there being interposed a bush (10) of elastomeric material.

## Description

This patent relates to adjustable feet for small power machines, such as belt or slat conveyors. Said feet generally consist of a steel sleeve which is connected to the machine frame, and into which a threaded stem terminating with a support base is screwed.

The threaded stem is of steel or plastic construction and is screwed into the internally threaded sleeve by the amount necessary to define the desired foot height. The base of the support foot is of steel or plastic construction depending on the weight of the equipment to be supported, and is larger than the stem to provide a greater support surface and give increased machine stability.

This type of foot has the drawback of not adapting to those floors which are not perfectly flat or are slightly inclined. In these cases a bending moment is generated along the axis of the threaded stem which, by stressing this latter, makes it difficult to height-adjust the foot. This moment can assume such an intensity as to cause irreparable damage to the foot and/or stem.

To overcome this drawback, support feet are known comprising a ball joint between the stem and base of the foot. This solution enables the foot to adapt to those floors which are not perfection flat, so overcoming the problems of deflection and consequent malfunction or breakage of the stem, however it is of rather high manufacturing cost, it can create problems on mounting and adjusting the foot, and the foot is able to separate from the stem with a certain ease.

The object of the invention is to provide an adjustable support foot of simple, low-cost construction which is free from the aforesaid problems.

This object is attained according to the invention by a foot comprising a shell of rigid material such as steel plate, or resins such as thermoplastic polyamide or ABS, into which the threaded shank is snap-connected, between said shank and said shell there being interposed a ring of elastomeric material which enables it to undergo a certain degree of inclination. The shell is at least partially filled with elastomeric material to form its support base. The elastomeric material with which both the support base and the ring are formed is preferably vulcanized rubber or thermoplastic rubber or thermoplastic elastomeric polyurethane, or equivalent materials.

In order to clarify the operational and constructional characteristics of the invention two preferred embodiments thereof are described hereinafter by way of non-limiting example and illustrated on the accompanying drawings.

Figure 1 is a section through a first embodiment of the invention.

Figure 2 is an exploded view of the invention.

Figure 3 is a view of a second embodiment of the invention.

Figure 4 is a section on the plane IV-IV of Figure 3.

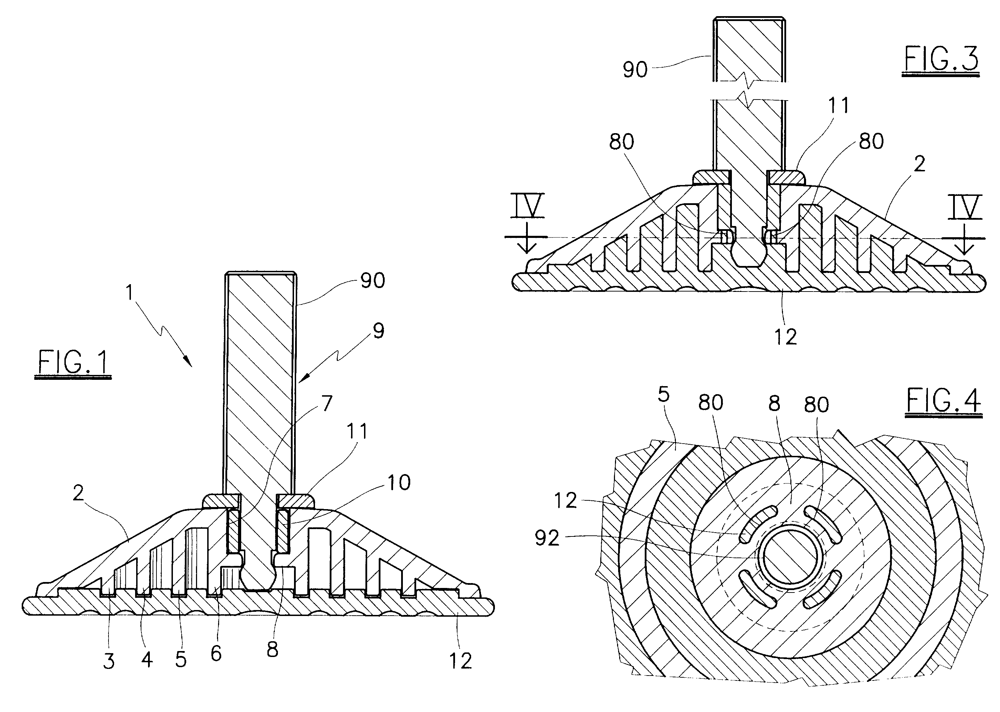

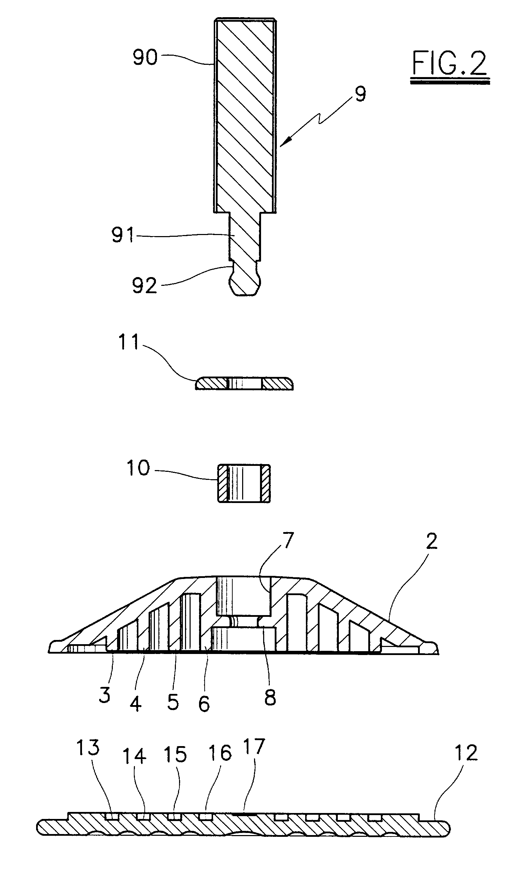

Figures 1 and 2 show the support foot, indicated overall by 1, comprising a concave outer shell 2 provided with circular stiffening ribs 3, 4, 5 and 6, constructed of rigid material such as thermoplastic rubber or a nylon and glass fibre composition, or equivalent materials. Said shell is also provided with a central hub 7 with a circumferential ledge 8, and receives the lower end of a shank 9, which is guided by the thermoplastic rubber bush 10 and the steel ring 11. In the illustrated embodiment the bush 10 is cylindrical, but could also have a wide upper flange on which the ring 11 rests.

That part 90 of the shank 9 which projects from the shell 2 is threaded and has a greater diameter than that shank part which is received within the central hub 7 of the shell 2. In addition, the part 91 has a profiled groove 92 which snap-engages the ledge 8 when the shank is inserted into said central hub 7, as shown in Figure 1. In this manner a snap connection is formed which prevents the shank 9 from withdrawing from the shell 2.

On the underside of the shell 2 there is provided an antivibration base 12 formed of thermoplastic rubber or an equivalent material. The anti-vibration base 12 upperly comprises a series of circular grooves 13, 14, 15 and 16, and a central circular depression 17. The grooves 13, 14, 15 and 16 respectively receive the lower end of the ribs 3, 4, 5 and 6, whereas the lower end of the shank 9 rests on the circular depression 17.

This first embodiment of the device of the invention is constructed by moulding each synthetic material component separately and then assembling the components subsequently.

Figure 3 shows a second embodiment of the device of the invention. In this second embodiment the base 12 extends into the shell 2 to the extent of filling all the empty spaces. This second embodiment of the device of the invention implies a different constructional process. In this case the shell 2 is moulded initially, after which the shank 9 and ring 11 are mounted on it, the resultant unit then being placed in a mould into which the elastomeric material to form the anti-vibration base 12 and the bush 10 is injected. For this purpose passage apertures 80 are provided in the ledge 8 for the injected liquid elastomeric material, to enable it to fill the space above the ledge 8.

## Claims

1. An adjustable support foot for power machines comprising a threaded shank connected to a large flat support base,
characterised in that the large support base comprises a rigid outer shell resting on a layer of elastomeric material and having a hub provided with means for snap-connecting the lower profiled end of the shank, between said hub and said shank there being interposed a bush of elastomeric material.

2. An adjustable support foot as claimed in claim 1, characterised in that that part of the shank projecting from the wide base has a greater diameter than the hub.

3. An adjustable support foot as claimed in claim 1, characterised in that between the base and the threaded shank there is interposed a steel washer on which that shank part projecting from the hub rests.

4. An adjustable support foot as claimed in the preceding claims, characterised in that said connection means comprise a holed ledge with which the profiled end of said shank snap-engages.

5. An adjustable support foot as claimed in the preceding claims, characterised in that said shell is concave and is provided lowerly with circular ribs.

6. An adjustable support foot as claimed in claim 5, characterised in that said ribs are concentric.

7. An adjustable support foot as claimed in the preceding claims, characterised in that said support base upperly comprises circular grooves for receiving the ribs of said shell.

8. An adjustable support foot as claimed in the preceding claims, characterised in that said bush and said base of elastomeric material are formed as one piece.
